# EUROPEAN PATENT APPLICATION

(11) **EP 1 450 073 A2**
(43) Date of publication of application: **25.08.2004**
(21) Application number: 04003815.0
(22) Date of filing: 19.02.2004
(51) Int. Cl.: F16H 59/10

(54) **Lever assembly for a vehicle transmission**

(30) Priority: 21.02.2003 JP 2003044102
(71) Applicant: Calsonic Kansei Corporation, Tokyo 164-8602 (JP)
(72) Inventor: Kondo, Daisuke, Tokyo 164-8602 (JP); Ogasawara, Takeshi, Tokyo 164-8602 (JP); Satoh, Takeshi, Tokyo 164-8602 (JP); Mori, Takanori, Tokyo 164-8602 (JP)
(74) Representative: Grünecker, Kinkeldey, Stockmair & Schwanhäusser Anwaltssozietät

(57) **Abstract**

An operation lever assembly of a vehicle transmission operator includes a lever base mounted on a vehicle body and having a top face formed with a hole. The assembly includes an engagement member mounted to the lever base from below and protruding through the hole. The assembly includes a tubular lever body joined to a protruding portion of the engagement member and mounted to an upper portion of the lever base. The assembly includes a rod accommodated in the lever body and extending vertically. The assembly includes a resilient member located between a lower end of the rod and a top face of the engagement member for biasing the rod upwardly. The lever body has a slit cut from a lower end of the lever body to a height position in an axial direction of the lever body. The rod is mounted with a lock-pin extending in a transverse direction of the lever body. The lock-pin protrudes outwardly through the slit.

## Description

### CROSS-REFERENCE TO RELATED APPLICATIONS

This application is based upon and claims the benefit of priority from Japanese Patent Application No. 2003-044102 filed on February 21, 2003; the entire contents of which are incorporated herein by reference.

### BACKGROUND OF THE INVENTION

The present invention relates to an operation lever assembly of a vehicle transmission operator for changing positions of a transmission by sliding an operation lever.

Such an operation lever assembly is used in an automatic vehicle transmission operator of an automobile and the like. The operation lever includes a lever body which is a control lever (select lever). The operation lever includes a rod which is inserted into the lever body and which moves vertically. The operation lever includes a shift-knob mounted on a distal end of the rod and a lock-pin which is press-fitted into a proximal end of the rod. The operation lever includes a spring which normally biases the rod upward. The operation lever includes a lever base having a rotation shaft as the rotation center of the operation lever.

The lever body and the lever base are integrally formed or welded to each other. Thus, during assembling of the operation lever, the spring and the rod are inserted, in this order, into a through hole formed in the center of the operation lever from the distal end of the lever body on which the shift-knob is mounted. The lever body is then fixed by chucking means. A notch (lock-pin-movable hole) is formed in the lever body. The lock-pin is press-fitted, from the notch, into a hole formed in the proximal end of the rod (see Japanese Patent Application Laid-Open No. H11 (2001) - 286225 for example).

### SUMMARY OF THE INVENTION

When the lock-pin is press-fitted into the hole, it is necessary to strongly fix and retain the lever body. By strongly fixing and holding the lever body, the lever body adversely bears a mark of the chucking means which fixes the lever body. Therefore, the lever body can not be used as a design surface as it is, and it is necessary to cover the lever body with another member.

When the lock-pin is press-fitted into the hole, the rod can not be fixed directly. The spring pushes the rod, and fixing of the press-fitting position is difficult. For this reason, the lock-pin and the notch of the lever body is required to have a great clearance threrebetween. When the lock-pin is press-fitted into the hole, a special positioning jig is required.

It is an object of the present invention to provide an operation lever assembly of a vehicle transmission operator which can be assembled easily and precisely without scratching the lever body nor using a special jig.

The invention provides a first aspect directed to the following operation lever assembly of a vehicle transmission operator. The assembly includes a lever base mounted on a vehicle body and having a top face formed with a hole. The assembly includes an engagement member mounted to the lever base from below and protruding through the hole. The assembly includes a tubular lever body joined to a protruding portion of the engagement member and mounted to an upper portion of the lever base. The assembly includes a rod accommodated in the lever body and extending vertically. The assembly includes a resilient member located between a lower end of the rod and a top face of the engagement member for biasing the rod upwardly. The lever body has a slit cut from a lower end of the lever body to a height position in an axial direction of the lever body. The rod is mounted with a lock-pin extending in a transverse direction of the lever body. The lock-pin protrudes outwardly through the slit.

The lever base may be mounted with a rotation stopper. The rotation stopper may engage with an engagement portion formed at the lower end of the lever body for preventing the lever body from rotating.

The lower end of the rod may include a guide for positioning and retaining the resilient member.

The engagement member may have an upper end including a guide for positioning and retaining the resilient member.

The engagement member and the lever body may be joined to each other by bolt fastening.

The invention provides a second aspect directed to a method of assembling an operation lever. The method includes the step of mounting a locking member transversely to an operation rod of an operation lever. The method includes the step of inserting the operation rod longitudinally in a tubular member of the operation lever, inserting the locking member longitudinally in an opening of the tubular member. The method includes the step of screwing the tubular member having the operation rod and the locking member and a base of the operation lever to each other.

### BRIEF DESCRIPTION OF THE ACCOMPANYING DRAWINGS

Fig. 1 is an exploded perspective view of an automatic vehicle transmission operator of an embodiment;
Fig. 2 is a side view of the transmission operator shown in Fig. 1;
Fig. 3 is a sectional view of the transmission operator as taken along III-III in Fig. 2;
Fig. 4 is an exploded perspective view of the transmission operator shown in Fig. 1 in which a torque sensor is assembled to the lower end of a select lever;
Fig. 5 illustrates a fixing portion of the torque sensor in the transmission operator shown in Fig. 1;
Figs. 6A and 6B illustrate an operation lever assembly of the transmission operator shown in Fig. 1, wherein Fig. 6A is a front view thereof and Fig. 6B is a side view thereof;
Fig. 7 is a sectional view of the operation lever assembly in the transmission operator taken along VII-VII in Fig. 6B; and
Fig. 8 is an exploded sectional view of the operation lever assembly of the transmission operator shown in Fig. 7.

### DETAILED DESCRIPTION OF THE PREFERRED EMBODIMENTS

Embodiments of the present invention will be specifically explained with reference to the drawings.

The embodiments are applied to an operation lever assembly of an automatic vehicle transmission operator. The operation lever adds assisting power to operating power generated in an input operator to change positions of an automatic transmission. This reduces a burden of a driver's shifting operation.

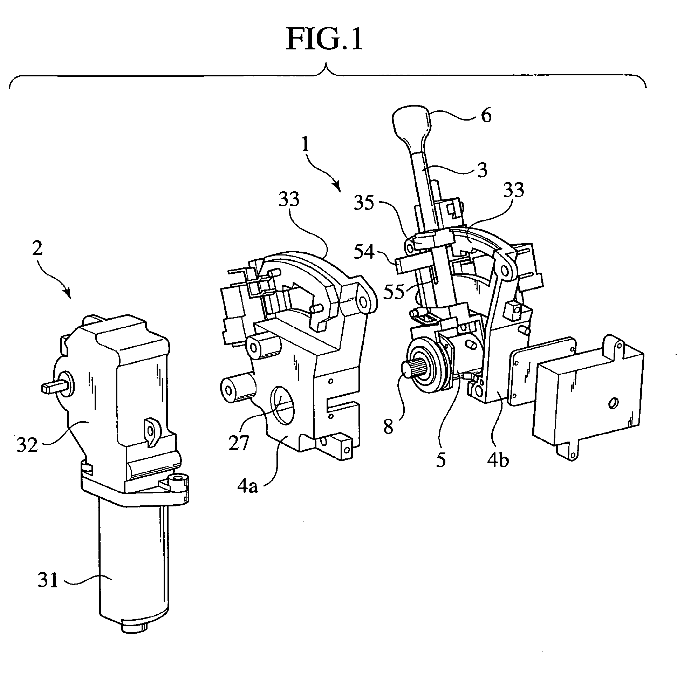

As shown in Fig. 1, the transmission operator includes an input operator 1 which changes positions (range positions) of the automatic transmission. The transmission operator includes a power assistor 2 which adds the assisting power to the operating power generated in input operator 1 and outputs the resultant to the automatic transmission. The transmission operator includes a transmitting mechanism (not shown) for transmitting the output to the automatic transmission.

As shown in Fig. 1, the power assistor 2 includes an electric motor 31 for adding the assisting power to the operating power generated in input operator 1. The power assistor 2 includes a case 32 for fixing electric motor 31. The power assistor 2 includes a gear mechanism (a combination of worm gear and worm wheel gear) accommodated in case 32. According to this power assistor 2, as the operating power of select lever 3 increases, a torque detected by a torque sensor 5 also increases. This is used to increase voltage to be applied to electric motor 31 in accordance with the torque. The rotation power of electric motor 31 is added to the operating power as the assisting power, and this is output to an output shaft 8 of torque sensor 5.

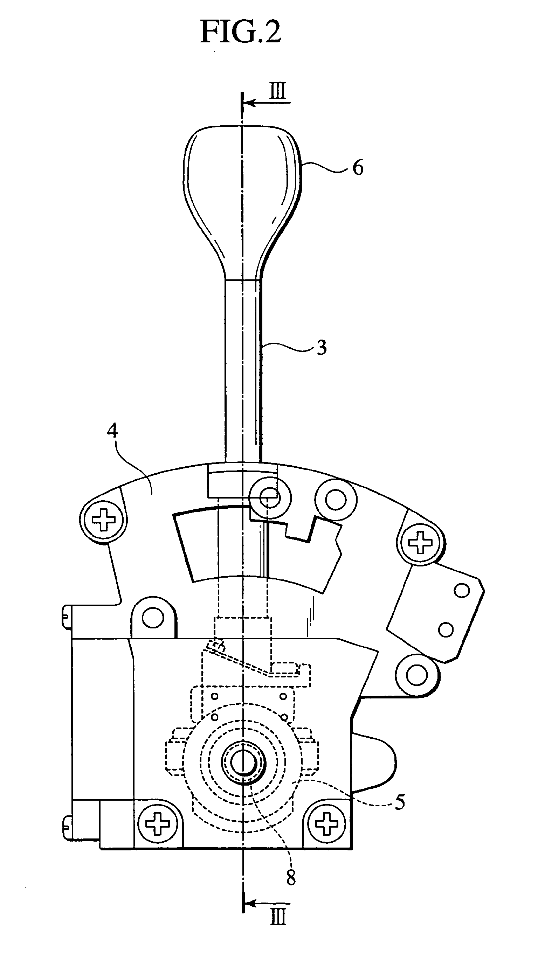

As shown in Figs. 1 to 3, the input operator 1 includes select lever (control lever) 3 as the operation lever. The input operator 1 includes a lever case 4 with first case 4a and a second case 4b which support select lever 3. The input operator 1 includes torque sensor 5 as torque detecting means for detecting operating power (rotation torque) generated during operation of select lever 3. The operation of select lever 3 changes the range positions (such as P range, R range, N range, D range, and L range) of the automatic transmission.

The select lever 3 has a shift-knob 6 mounted on the distal end. The shift-knob 6 is grasped by a driver to slide select lever 3. The select lever 3 is provided at the lower end with assembling structure for assembling torque sensor 5.

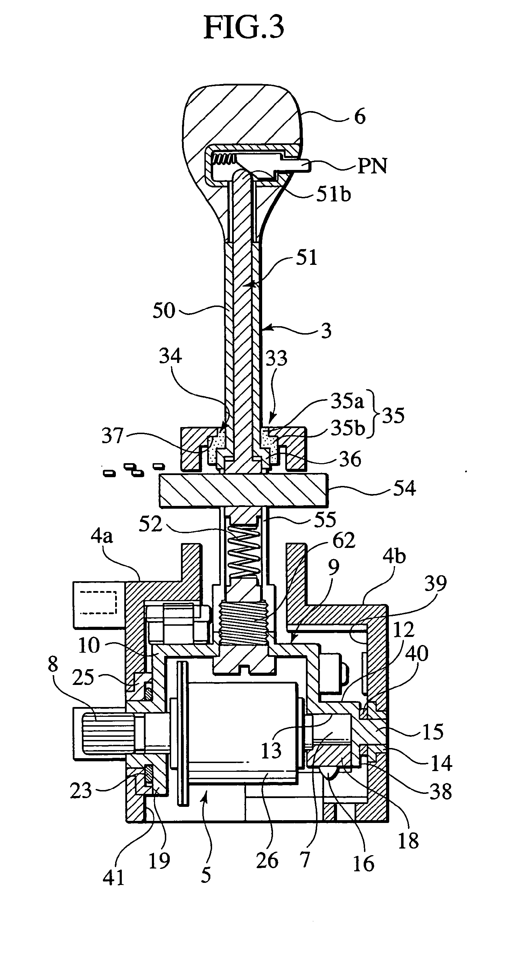

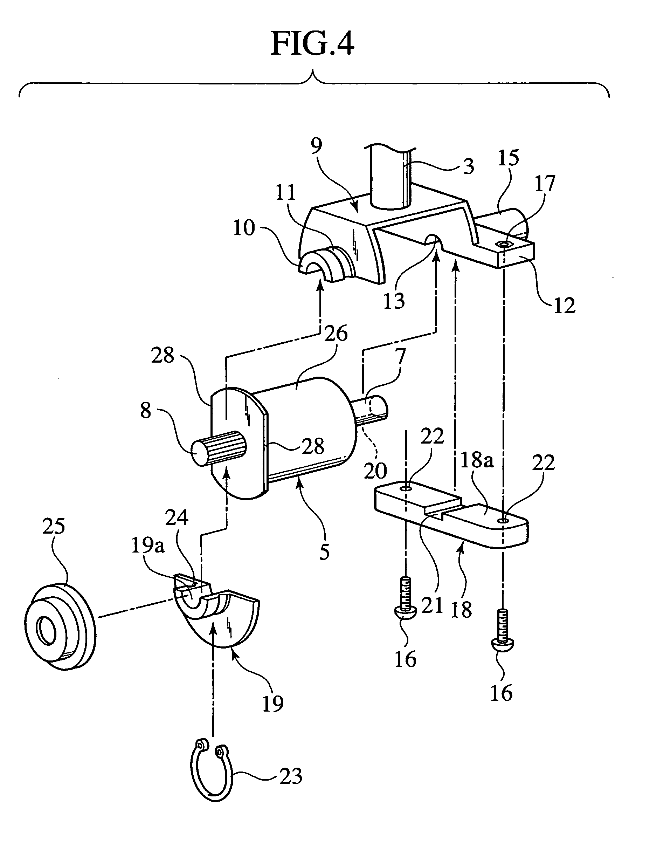

As shown in Figs. 3 and 4, the assembling structure is vertically divided into an upper member and a lower member, with respect to an input shaft 7 and output shaft 8 of torque sensor 5.

The upper member includes a lever base 9 formed as a housing having a substantially U-shaped cross section. The lever base 9 is fixed to the lower end of select lever 3. The lever base 9 is provided at the end with a first bearing member 10 which constitutes a bearing mechanism. The first bearing member 10 rotatably supports output shaft 8 of torque sensor 5. The first bearing member 10 is joined to a second bearing member 19 which is a later-described lower member, forming a bearing for rotatably supporting output shaft 8. The first bearing member 10, 19 is formed at the periphery with a ring fitting groove 11 for fitting later-described ring member 23 around the first groove 11.

The lever base 9 has another end having a first fixing member 12 as a fixing mechanism for fixing input shaft 7. The first fixing member 12 includes a substantially semi-circular input shaft guide 13 which covers the upper half of input shaft 7. The first fixing member 12 includes a rotation shaft 15 which is fitted into a bush 14 which is press-fitted into second case 4b. The first fixing member 12 includes screw holes 17 through which a second fixing member 18 (later-described lower member) is fixed to first fixing member 12 by means of screws 16.

The lower member includes second fixing member 18 as the fixing mechanism which is fixed to first fixing member 12 for non-rotatably fixing input shaft 7. The lower member includes a second bearing member 19 as a bearing mechanism. Second bearing member 19 and first bearing member 10 form a bearing for rotatably supporting output shaft 8.

The second fixing member 18 is formed with a flat surface portion 21 which comes into close contact with a flat surface portion 20, serving as rotation-detent member, formed on the lower side of input shaft 7, thereby fixing input shaft 7 to first fixing member 12. The flat surface portion 21 is groove having a substantially U-shaped section formed in the fixing surface 18a of second fixing member 18. The second fixing member 18 includes screw holes 22 through which second fixing member 18 is fixed to first fixing member 12 by screws 16.

The flat surface portion 20 formed on input shaft 7 and the flat surface portion 21 formed in second fixing member 18 are brought into close contact with each other in this manner, and second fixing member 18 is fixed to first fixing member 12 by the screws. By fixing these members 18 and 12, rattles of input shaft 7 in its both rotation and axial directions are eliminated. Therefore, the embodiment prevents detection error of a torque detecting value caused by the rattle of input shaft 7.

The second bearing member 19 includes a semi-circular receiver 19a which rotatably supports output shaft 8. The second bearing member 19 is joined to first bearing member 10, forming a bearing. The second bearing member 19 is formed with a ring fitting groove 24 around which C-shaped ring member 23 having spring properties is fitted. The second bearing member 19 is brought into abutment against first bearing member 10. The ring member 23 is fitted into respective ring fitting grooves 11 and 24. This forms the bearing for rotatably supporting output shaft 8.

The first bearing member 10 and second bearing member 19, fixed to each other by ring member 23, is inserted into a bush 25 which is press-fitted into first case 4a and is fixed to first case 4a.

As shown in Figs. 3 and 4, torque sensor 5 includes a sensor body 26 which is provided at the opposite ends with input shaft 7 and output shaft 8. As described above, the input shaft 7 includes flat surface portion 20 serving as a detent member which can be fixed to select lever 3 without rattle. The output shaft 8 is coaxial with input shaft 7 and is rotatably supported by the bearing. The distal end of output shaft 8 is connected to later-described power assistor 2 through a circular hole 27 formed in first case 4a.

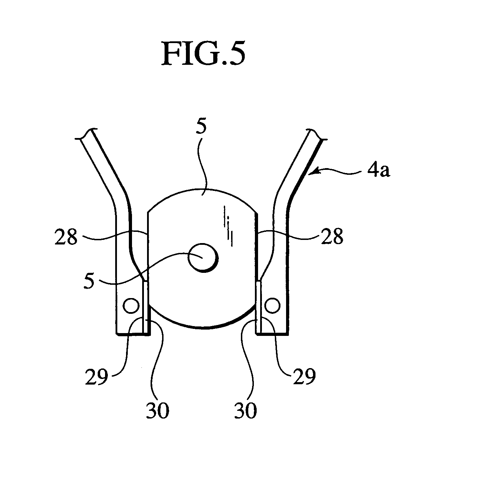

The sensor body 26 is provided at the opposite sides with flat portions 28 for preventing torque sensor 5 from rotating around the axis. As shown in Fig. 5, the flat portions 28 are interposed between inner wall surfaces 29 formed inside first case 4a.

The interposition of flat portions 28 formed on sensor body 26 between the inner wall surfaces 29 of first case 4a prevents a rotation rattle of torque sensor 5. The inner wall surfaces 29 of first case 4a are provided with elastic rubber members 30 so that a rattle is not caused due to poor working precision. The interposition of sensor body 26 between rubber members 30 prevents a value detected by torque sensor 5 from being varied.

As shown in Fig. 3, select lever 3 holding torque sensor 5 at the lower end is accommodated in lever case 4. The rotation shaft 15 is inserted into bush 14 formed in first case 4a so that select lever 3 can rotate. The first bearing member 10 and second bearing member 19 are coupled to each other to form the bearing which is inserted into bush 25 formed in second case 4a so that select lever 3 can rotate. The select lever 3 faces a slide groove 33 formed in lever case 4. The slide groove 33 is formed in the upper end of lever case 4 over a sliding range of select lever 3.

The select lever 3 includes an intermediate portion. As shown in Fig. 3, the intermediate portion is mounted to a slide member 35 which comes into contact with the opening inner peripheral edge 34 of slide groove 33. The slide member 35 is formed as a slide sleeve including two cylindrical portions, i.e., a small-diameter portion 35a and a large-diameter portion 35b having different diameters vertically. The slide member 35 is inserted into select lever 3 from the distal end on which shift-knob 6 is mounted, and is fixed at the intermediate portion of the lever 3. The slide member 35 is mounted at a position closer to shift-knob 6 than rotation shaft 15 of select lever 3. According to this arrangement, a rattle of select lever 3 is suppressed at a position close to shift-knob 6.

The slide member 35 is fixed by a supporting portion 36 formed on select lever 3. That is, the slide member 35 is fixed to select lever 3 by fitting large-diameter portion 35b of slide member 35 into supporting portion 36. The fitting of large-diameter portion 35b into supporting portion 36 prevents slide member 35 from falling out from select lever 3 downward (toward torque sensor 5).

The slide groove 33 has opening inner peripheral edge 34 which has a guide 37 for guiding the sliding motion of slide member 35. The guide 37 is formed into a stepped shape in coincidence with the shape of slide member 35. The guide 37 is formed over the entire length of slide groove 33. The slide member 35 has flexibility to some extent in the vertical direction.

By mounting slide member 35 on select lever 3, the slide member 35 comes into contact with opening inner peripheral edge 34 and slides thereon, and slides together with select lever 3. This prevents select lever 3 from rattling. That is, a rattle produced between slide groove 33 and select lever 3 is absorbed by slide member 35 mounted on select lever 3. Therefore, if slide member 35 is added, the cost of the assembly is less increased and the assembly is more inexpensive as compared with a case in which working precision of rotation shaft 15 or bush 14 of select lever 3 is enhanced.

As shown in Fig. 3, the input operator 1 includes a side surface 38 of the lower end of select lever 3 closer to the proximal end of rotation shaft 15. The input operator lincludes an inner surface 39 of the lever case in the vicinity of bush 14 which rotatably supports rotation shaft 15. The side surface 38 and inner surface 39 has threrebetween a spring member 40 as an elastic member for pushing select lever 3 against lever case 4. The spring member 40 employs a wave washer. The elastic spring member 40 can push select lever 3 against an inner surface 41 of first case 4a in lever case 4. The spring member 40 has a compression margin which absorbs size variations of lever case 4 and select lever 3. This eliminates a rattle even if the working precision is the same level as the conventional technique.

In the conventional configuration, a case cover is mounted on the case for preventing a torque sensor from falling out. However, size variations caused by assembling of the case and the case cover allow the torque sensor to be axially moved using the spline. The movable torque sensor produces a lateral rattle on the select lever. On the other hand, this embodiment has the configuration where spring member 40 provided between side surface 38 and inner surface 39biases select lever 3 against one inner surface 41 of the lever case 4 under a constant biasing force. This configuration prevents a rattle produced in select lever 3 in the lateral direction (axial direction of rotation shaft 15).

Therefore, the spring member 40 prevents the rattle of the lower end of select lever 3. The slide member 35, which comes into contact with opening inner peripheral edge 34 and slides thereon, is provided in the vicinity of shift-knob 6. This configuration further reduces the rattle of select lever 3. As a result, even if the transmission operator of the automatic vehicle is applied to an input operator having a short stroke, a rattle caused by stroke is suppressed, thus giving the driver comfortable shifting operation.

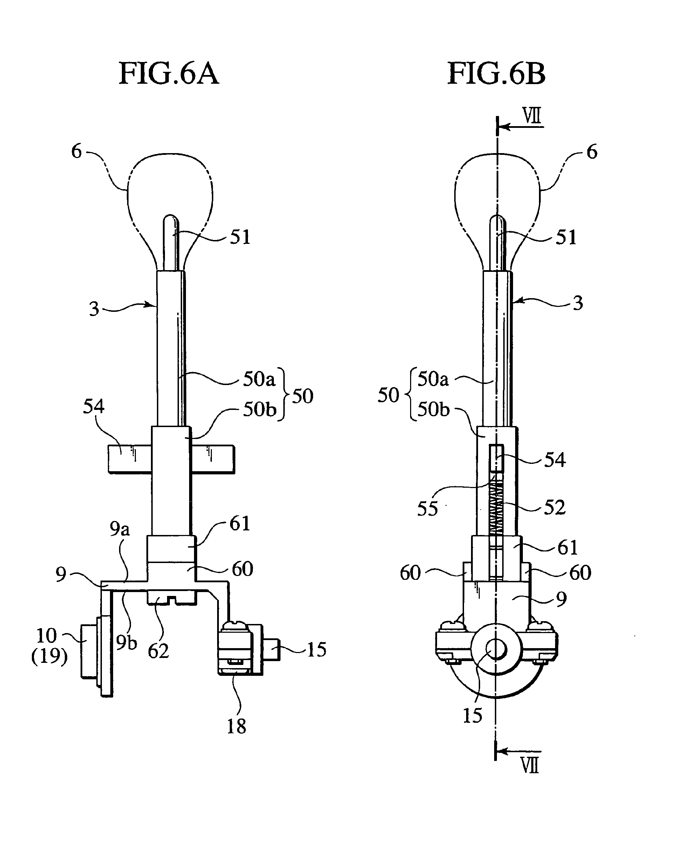

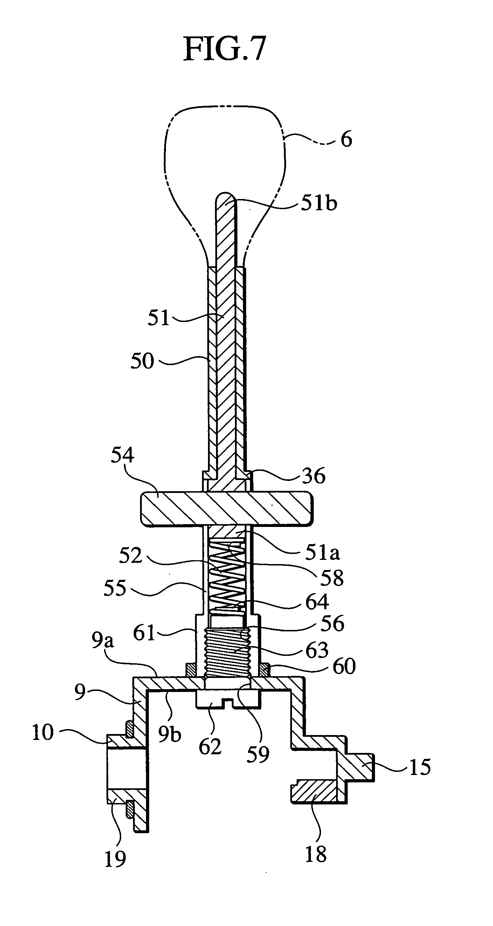

The select lever 3 has a configuration shown in Figs. 6 to 8 so that select lever 3 can easily and precisely be assembled without a special jig or the like. The select lever 3 includes a lever body 50 and a rod 51 inserted into a guide hole 53 formed in the lever body 50. The select lever 3 includes a spring 52 as an elastic member for biasing rod 51 upwardly, and lever base 9. The select lever 3 includes fixing means for fixing lever body 50 to lever base 9.

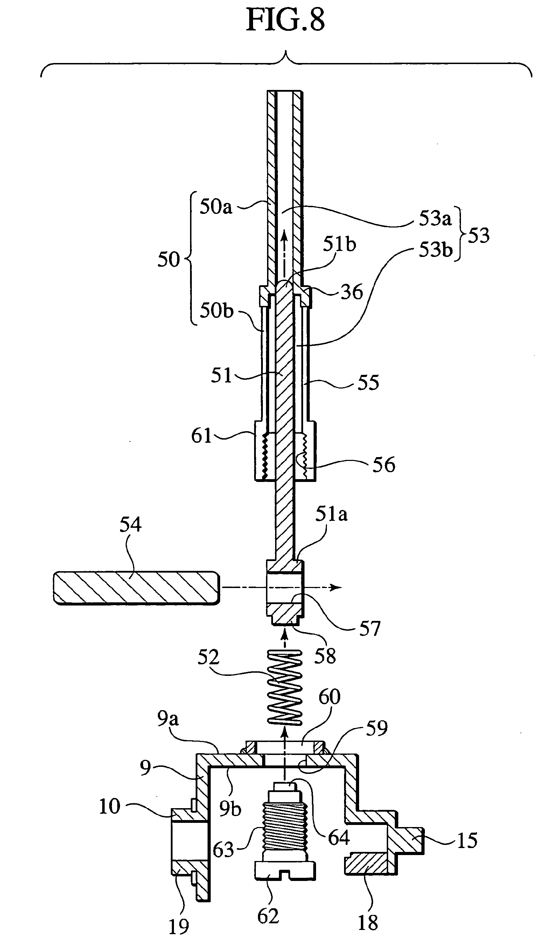

In Fig. 8, the lever body 50 includes a cylindrical small-diameter portion 50a. The lever body 50 also includes a cylindrical large-diameter portion 50b having larger diameter than that of small-diameter portion 50a. The lever body 50 has at the center a guide hole 53 which extends vertically through lever body 50. The rod 51 inserted into guide hole 53 is vertically movably guided in guide hole 53. The guide hole 53 includes a guide hole 53a formed in small-diameter portion 50a. The guide hole 53 also includes a guide hole 53b formed in large-diameter portion 50b. The guide hole 53a with smaller diameter has rod 51 to be inserted thereinto. The guide hole 53b with larger diameter has rod 51 with a proximal end 51a to be inserted thereinto. The rod 51 has lock-pin 54 to be inserted therethrough. The large-diameter portion 50b of lever body 50 has a proximal end which has a retaining portion 61 for preventing lever body 50 from rotating with respect to lever base 9. The retaining portion 61 is not formed into a cylindrical shape for preventing its rotation but is formed into a square shape for positioning it. The retaining portion 61 engages with a rotation stopper 60 which is formed on later-described lever base 9. The retaining portion 61 may be formed into a polygonal shape other than a square shape.

The lever body 50 includes a slit 55 formed from the proximal end of large-diameter portion 50b to a predetermined height position. The slit 55 has lock-pin 54 inserted and protruding therefrom. When pushing of a button PN (Fig. 3) provided on shift-knob 6 permits rod 51 to be pushed down, the slit 55 guides lock-pin 54 to be vertically moved. The slit 55 has a width which is set to such a value that a minimum clearance is ensured to slide lock-pin 54. Therefore, no rattle is produced between lock-pin 54 and slit 55, which enhances the operating feeling of select lever 3. The lever body 50 includes a thread 56, as a portion to be fixed, on the inner peripheral surface of the proximal end of guide hole 53b formed in large-diameter portion 50b. The thread 56 is a female thread which is threadedly engaged with a later-described fixing screw 62.

The rod 51 is inserted into guide hole 53, with a distal end 51b projecting upward from lever body 50 to engage with button PN in shift-knob 6. The proximal end 51a of rod 51 is formed with a lock-pin insertion hole 57 into which lock-pin 54 is press-fitted in a lateral direction normal to the axial direction. The proximal end 51a of rod 51 includes a lower end which has a guide 58 for positioning and retaining spring 52. The guide 58 is formed into a circular projection and comes into the distal end of spring 52 to be guided.

The spring 52 has a coil spring having such a size that spring 52 can be inserted into guide hole 53b formed in large-diameter portion 50b. The spring 52 is inserted into guide hole 53b and comes into contact with proximal end 51a of rod 51 to normally bias rod 51 upward.

The lever base 9 includes a hole 59 for fixing lever body 50 to a surface 9a of lever base 9 using the later-described fixing means. The lever body 50 includes guide hole 53 through which rod 51 and spring 52 are inserted. The hole 59 includes a periphery having rotation stopper 60 for preventing lever body 50 from rotating with respect to lever base 9. The rotation stopper 60 projects, as low guide walls, from opposite sides relative to square retaining portion 61. The rotation stopper 60 comes into contact with opposed side surfaces of retaining portion 61. This configuration prevents lever body 50 from rotating with respect to lever base 9.

The fixing means includes thread 56, as a portion to be fixed, on the inner peripheral surface of the proximal end of guide hole 53. The fixing means includes fixing screw 62 which threadedly engages with thread 56 to fix lever body 50 to lever base 9. The thread 56 as female thread is formed in the inner peripheral surface of the proximal end of guide hole 53 at a position corresponding to retaining portion 61 formed on lever body 50. The fixing screw 62 includes a male screw 63 which is threadedly engaged with thread 56. The fixing screw 62 is provided at the distal end with a guide 64 for positioning and retaining spring 52. The guide 64 is formed as a circular projection and comes into the distal end of spring 52 to guide spring 52.

Assembling procedure of the operation lever assembly will be explained next.

Referring to Fig. 8, the lock-pin 54 is press-fitted into lock-pin insertion hole 57 formed in proximal end 51a of rod 51. Next, the rod 51 into which lock-pin 54 is press-fitted is inserted into guide hole 53 of lever body 50. When the rod 51 is inserted into guide hole 53, the lock-pin 54 press-fitted into rod 51 is exposed from slit 55 formed in lever body 50. Then, spring 52 is inserted into guide hole 53.

The lever body 50 having rod 51 and spring 52 inserted into guide hole 53 is mounted on lever base 9. The lever body 50 is mounted on lever base 9 while positioning retaining portion 61 of lever body 50 with respect to rotation stopper 60 formed on lever base 9. With this configuration, lever body 50 is retained by rotation stopper 60 such that lever body 50 can not rotate.

Next, the fixing screw 62 is inserted into hole 59 formed in lever base 9 from a back surface 9b which is opposite from surface 9a of lever base 9 which fixes lever body 50. The fixing screw 62 is threadedly engaged with thread 56 of lever body 50. When the fixing screw 62 is threadedly engaged with thread 56, rotation stopper 60 prevents lever body 50 from rotating even if lever body 50 is not fixed by a jig or the like. This facilitates the fastening operation of screw.

The fastening fixing screw 62 applies a predetermined load to spring 52, which normally biases rod 51 upward. Guide 58 of rod 51 and guide 64 of fixing screw 62 respectively enter upper end lower end of spring 52. This positions spring 52 in guide hole 53 without rattling.

According to this embodiment, the lock-pin 54 can easily be press-fitted into rod 51 before it is inserted into lever body 50 using a fixing jig. The rod 51, fixed when lock-pin 54 is press-fitted, is covered with lever body 50 after press-fitting of lock-pin 54. This prevents the surface of lever body 50 from being not damaged. The lever body 50 is fixed to lever base 9 by fixing screw 62, thus facilitating assemble. This reduces the assembling steps, and needs no equipment such as special jig, thus reducing productive cost.

Although the invention has been described above by reference to certain embodiments of the invention, the invention is not limited to the embodiments described above. Modifications and variations of the embodiments described above will occur to those skilled in the art, in light of the above teachings. The scope of the invention is defined with reference to the following claims.

In accordance with the invention, before inserting of the rod in the lever body, the lock pin is inserted in the rod in advance. The rod, in which lock pin is inserted, is inserted in the lever body as another component. The lever body is fixed to the lever base, using the engagement member. This facilitates press-fitting of the lock pin in the rod, without a special jig and allows the lever body to be used as a design surface as it is, without damaging of the surface of the lever body.

The previous press fitting of the lock pin in the rod permits small clearance between the slit formed to the lever body and the lock pin in the slit. This dimensional accuracy therebetween enhances operating feeling during shift operation and allows a smaller size.

The lever base is formed with the rotation stopper which engages with engagement portion formed to the proximal end of the lever body for preventing the lever body from rotating. This facilitates assembling of the lever body to the lever base, and requires no special equipment such as a positioning jig.

The rod is formed at the lower end with the guide for positioning and retaining the resilient member. This allows the upper end of the resilient member to be positioned by the guide without rattle. The resilient member may employ, for example, a spring.

The engagement member is formed at the upper end with the guide for positioning and retaining the resilient member. This allows the lower end of the resilient member to be positioned by the guide without rattle, and prevents the resilient member from rattling during expanding or contracting.

The joining of the engagement member and the lever body to each other by bolt fastening allows the lever body to be easily fixed to the lever base by screwing, without a lot of work such as welding.

## Claims

1. An operation lever assembly of a vehicle transmission operator comprising:
a lever base mounted on a vehicle body and having a top face formed with a hole;
an engagement member mounted to the lever base from below and protruding through the hole;
a tubular lever body joined to a protruding portion of the engagement member and mounted to an upper portion of the lever base;
a rod accommodated in the lever body and extending vertically;
a resilient member located between a lower end of the rod and a top face of the engagement member for biasing the rod upwardly,
wherein the lever body has a slit cut from a lower end of the lever body to a height position in an axial direction of the lever body,
wherein the rod is mounted with a lock-pin extending in a transverse direction of the lever body,
wherein the lock-pin protrudes outwardly through the slit.

2. An operation lever assembly according to claim 1,
wherein the lever base is mounted with a rotation stopper, and
wherein the rotation stopper engages with an engagement portion formed at the lower end of the lever body for preventing the lever body from rotating.

3. An operation lever assembly according to claim 1,
wherein the lower end of the rod includes a guide for positioning and retaining the resilient member.

4. An operation lever assembly according to claim 1,
wherein the engagement member has an upper end including a guide for positioning and retaining the resilient member.

5. An operation lever assembly according to claim 1,
wherein the engagement member and the lever body are joined to each other by bolt fastening.

6. A method of assembling an operation lever, comprising:
mounting a locking member transversely to an operation rod of an operation lever;
inserting the operation rod longitudinally in a tubular member of the operation lever, inserting the locking member longitudinally in an opening of the tubular member; and
screwing the tubular member having the operation rod and the locking member and a base of the operation lever to each other.
